# EUROPEAN PATENT APPLICATION

(11) **EP 1 884 504 A2**
(43) Date of publication of application: **06.02.2008**
(21) Application number: 07075488.2
(22) Date of filing: 20.06.2007
(51) Int. Cl.: C04B 41/89

(54) **A process for realising construction products for covering surfaces, in particular tiles and/or the like, and a product realised by means of the process**

(30) Priority: 31.07.2006 IT MO20060245
(71) Applicant: Iniziativa Otto S.r.l., 41100 Modena (IT)
(72) Inventor: Bonezzi, Massimo, 41049 Sassuolo Modena (IT)
(74) Representative: Gotra, Stefano

(57) **Abstract**

A process for realising a tile (2) comprises a stage of forming, by means of which a support (3) is shaped, a stage of application of a preparation glaze on the formed support (3), a stage of firing the formed and pre-treated support (3), a stage of controlled variation of the temperature (Ts) of the pre-treated and fired support (3), a stage of application of a covering or decorating glaze (5) on the preparation glaze (4) and a further stage of firing in order to stabilise the deposited coatings.

## Description

The invention relates to a process for realising products for covering surfaces in construction, in particular tiles and/or the like.

A construction product, in particular a tile, is also object of the present invention.

The present invention is usefully applied in the construction sector, and in particular concerns the industrial sector of the production of finishing products, such as for example tiles made of clay materials, porcelain, ceramics and/or any other material suited to the realisation of tiles for surface covering.

As is known, the prior art for realising tiles destined for use in finishing domestic, public, industrial and/or commercial environments can vary according to some parameters which identify the quality and the physical-mechanical characteristics thereof.

In particular three distinct production methods are known, which give rise to different tiles.

A first process for realising tiles belongs to the category of glazed stoneware or vitrified stoneware, and consists principally in the forming of solid supports starting from composite loose materials, suitably mixed and sintered. Each solid support formed is glazed in order to obtain an unfired product, the surface of which is covered and decorated. Each solid glazed support is then subjected to a high-temperature firing process by means of which the definitive tile is obtained.

The tiles produced by means of this process generally exhibit a small thickness, water absorption of not more than 1% , and great strength, resistance to freezing and stains, chemical aggression, abrasion, loads and fire.

However, the glazing operation is considerably limited by the decoration of supports or products which are not fired and which require a subsequent firing at high temperatures, considerably altering the aesthetic appearance and characteristics of the tiles. In particular, it has been observed that the above-described sequence of operations or stages can give rise to a significant alteration of colour tone and an instability in the calibre, i.e. respectively a reduction in the neatness and exactness of the edges and a variation of the colours of the decoration, and a difference in the overall dimensions of the tiles themselves.

A second known process for realising tiles, classifiable in the "monoporosa" category, substantially exhibits the same stages as the first above-mentioned process.

Differently to the first process, the second process originates from a forming material that is radically different, which gives the final product different characteristics to those of "glazed stoneware" tiles.

The applicant has observed that also monoporosa category tiles exhibit some drawbacks due to the material itself, which due to problems associated with tenacity and bending, cannot be used with thickness of an average of less than 8 millimetres, and which exhibits a high absorption level, generally not lower than 10%.

In addition, similarly to the first above-described process, the second process also includes glazing of non-fired products, leading to problems of colour tone and calibre in the finished tiles.

A third process for realising tiles classifiable in the double-fired category includes a stage of forming the solid support which is the same as the forming in the other processes. Thereafter, the stage of forming is followed by a firing stage, at the end of which the fired support, commonly known as a biscuit, is inert and ready to be decorated. Finally the fired support is glazed and fired once more to fix the decoration made thereon.

The tiles obtained using the third process exhibit extremely stable decorations, subject to small changes in tone as well as in calibre. Usually these tiles exhibit smaller thicknesses in comparison with single-fired tiles, but they are still thicker than glazed stoneware tiles.

Worthy of note however is the fact that in this case too the absorption is still above 10%, like the products of the second-described process.

The doubling of the firing stage leads to a considerable increase in the costs of production and marketing of the tiles, which can only be justified by making them of the highest possible quality.

The aim of the present invention is to provide a process for realising construction products, in particular tiles, which exhibit extremely refined decorations while at the same time having small thickness.

The specified technical objective and the set aim are substantially attained by a process for realising construction products, in particular tiles and/or the like, and a construction product according to what is claimed herein below.

Further characteristics and advantages of the present invention will better emerge from the detailed description that follows of an embodiment of the invention, illustrated purely by way of non-limiting example in the accompanying figures of the drawings, in which:
figure 1 is a schematic representation of a process for realising construction products, in particular tiles and/or the like, according to the present invention;
figure 2 is a schematic representation of the process schematically illustrated in figure 1, in which a further operative stage is shown;
figure 3 is a partially-sectioned perspective view of a construction product, in particular a tile and/or the like, which can be obtained by the process schematically illustrated in the preceding figures of the drawings.

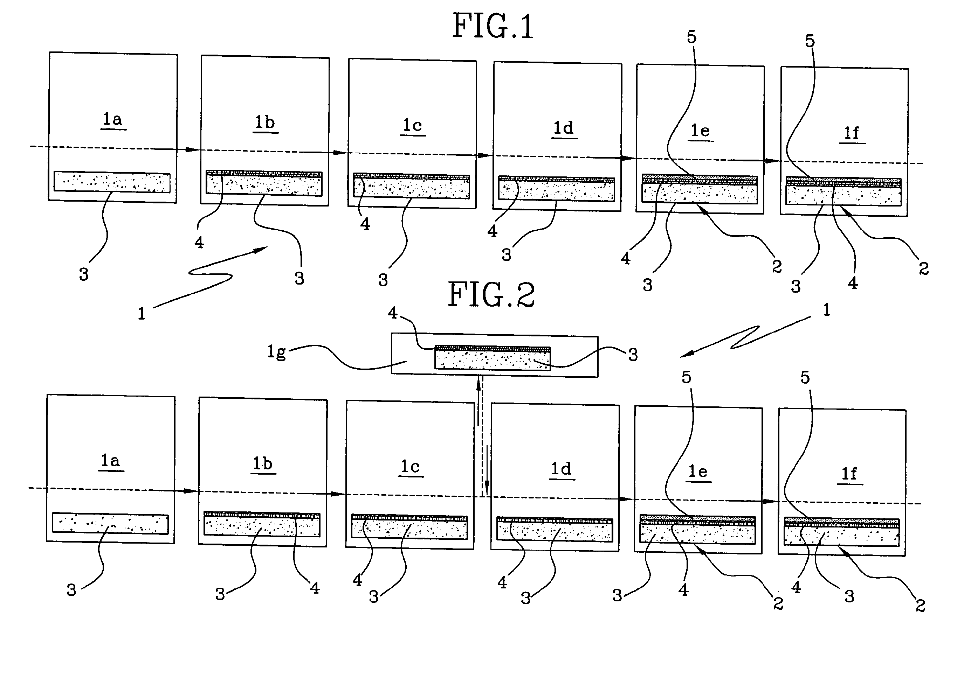

With reference to figures 1 and 2, a block diagram 1, representing a process for realising construction products and/or the like, comprises a preliminary stage of mixing one or more loose materials, selected preferably from among the classic loose materials for producing glazed stoneware, normal stoneware and white or super-white stoneware.

The above mixtures are in particular based on the following compositions:
the mix for glazed stoneware comprises 30% - 35% clay, 15%-20% sand, 15%-20% aplit, 7%-10% riolit and 14%-16% feldspars;
the mix for stoneware comprises 16%-18% sand, 25%-27% feldspars, 8%-10% feldspar sand, 33%-35% clay and 12%-14% aplit;
the mix for white stoneware comprises 16%-18% sand, 37%-38% feldspar, 9%-10% feldspar sand, 28%-30% clay, about 5% of kaolin;
the mix for super-white stoneware comprises about 5% sand, 10% feldspar sand, 50% feldspar, 26% clay, 2% of alumina and 2% zircon.

The mixing stage is followed by a forming stage, represented by block 1a in figures 1 and 2, of a substantially solid support 3. The forming stage is preferably done by sintering the initial mix, giving the support a substantially flat and squared-off shape.

The solid support 3 obtained is then subjected to a pre-treatment which is represented in figures 1 and 2 by block 1b.

In particular, the above-mentioned pre-treatment consists in applying, by means of suitable work machines, at least a coat of preparative glaze 4, preferably resistant to high temperatures.

The preparation glaze 4 (commonly known as slip or "ingobbio") is composed of above 26%-30% of clays, 30%-35% feldspars, 20%-22% of Zircosil, 7%-10% of alumina, 6%-8% of quartz. The pre-treated support 3 is then placed in a suitable kiln (not illustrated as of known type) and fired, represented by block 1c in figures 1 and 2.

The stage of firing the pre-treated solid support 3 is preferably done at a temperature comprised between 1150 and 1250°C.

Still with reference to figures 1 and 2, the schematised process includes a stage of varying the temperature Ts of the pre-treated and fired support 3, represented by block 1d, to allow a following application of a coat of covering glaze 5 onto the coat of preparation glaze 4.

The covering glaze 5 can be gloss or matt: if it is gloss, the composition of the glaze comprises, in variable percentages: frit, Kaolin, titanium oxide, sintocol and salts; if it is matt, the composition of the glaze comprises, also in variable percentages: fits, wollastonite, alumina, kaolin, sodium phosphates and titanium oxides.

In particular, the stage of varying the temperature Ts of the pre-treated and fired support 3 comprises a variation in temperature from an instantaneous temperature Ti to a predetermined fixing temperature Tf, at which the covering glaze 5 can grip on the preparation glaze 4, keying into it.

In order to obtain optimum keying of the covering glaze 5 on the preparation glaze 4, ensuring at the same time a high-quality sharpness and tone of the decoration, the fixing temperature Tf is preferably comprised between 1040°C and 1090°C.

In the schematic process of figure 1, the change in temperature Ts of the pre-treated and pre-fired support 3 is reduced from the instantaneous temperature Ti, which reaches around 1150°C-1250°C, to the fixing temperature Tf, at which the application of the covering coat 5 can be performed.

Once the fixing temperature Tf has been reached, the covering glaze 5 is suitably applied and/or deposited on the preparation glaze 4 as represented by block 1e in figures 1 and 2. The application of the covering glaze transforms the pre-treated product 3 into a covered and decorated product 3.

The covered product 3 is then subjected to a further firing stage, identified in figures 1 and 2 by block 1f, from which a fired and finished product 3 is obtained.

The glazed product 3 firing stage is preferably done at a temperature comprised between 1050°C and 1120°C.

With special reference to figure 2, the process of the present invention can also include, between the stage of firing the pre-treated product 3 and the stage of changing the temperature thereof, at least a storage stage, represented by block 1g.

The storage of the pre-treated and fired product 2 includes cooling the product 2. In this situation the following stage of varying the temperature Ts of the stored product 2 consists in a controlled heating operation of the product 2 up to a fixing temperature Tf at which the application of the covering glaze 5 can be performed.

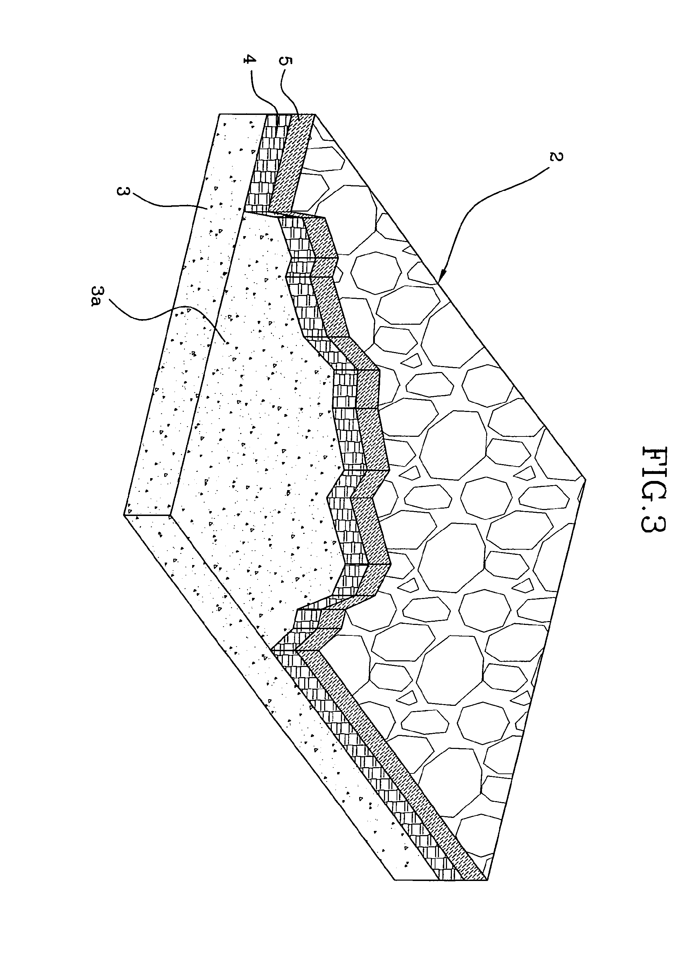

As can be seen in figure 3, the product 2 obtained by the above-described process comprises a support 3 preferably exhibiting a thickness of between 5mm and 10 mm. The support 3 further exhibits a surface 3a which is covered by two coats of glaze 4, 5, which constitute the aesthetic appearance of the product or tile.

The obtained product 2 preferably exhibits an overall thickness of at least 4 mm and not above 12 mm, and an absorption comprised between 0.1 % and 0.5%.

The above-described process resolves the problems encountered in the prior art and offers important advantages.

Firstly, the process of the present invention enables tiles to be produced having high-quality decorations, as in double-firing, and small thicknesses, such as those usually found for glazed stoneware. The process further enables an almost total absence of absorption to be obtained, which means the material can be exposed to external environments as well.

The above-described process enables a pre-glazed support to be produced, and to finish the first-applied glaze by applying a further covering glaze. Thus a product is obtained having the physical-mechanical advantages of glazed stoneware and the finished qualities of double-fired ceramics.

## Claims

1. A process for realising construction products for covering surfaces, in particular tiles and/or the like, comprising stages of:
forming a substantially solid support (3) from a substantially loose material;
firing the solid support (3) in order to obtain a fired support (3);
applying at least a covering glaze (5) on the fired support (3) in order to obtain a covered product (2);
firing the product (2) in order to obtain a fired and finished product (2);
**characterised in that** the solid support (3) is subjected to a pre-treatment comprising application of at least a preparation glaze (4), the application of the preparation glaze (4) being performed between stages of forming and firing the solid support (3).

2. The process of claim 1, **characterised in that** it comprises a stage of varying a temperature (Ts) of the pre-treated and fired support (3) in order to enable application of the at least a covering glaze (5) onto the pre-treated and fired support (3), the stage of varying the temperature (Ts) of the pre-treated and fired support (3) being performed between the stage of firing the pre-treated solid support (3) and the stage of applying the covering glaze (5).

3. The process of claim 2, **characterised in that** the stage of varying the temperature (Ts) of the pre-treated and fired support (3) comprises a change in the temperature (Ts) thereof from an instantaneous temperature (Ti) to a predetermined fixing temperature (Tf) of the covering glaze (5) onto the preparation glaze (4).

4. The process of claim 3, **characterised in that** the fixing temperature (Tf) is comprised between 1040°C and 1090°C.

5. The process of claim 3 or 4, **characterised in that** the variation of temperature (Ts) of the pre-treated and fired support (3) comprises a reduction in the temperature (Ts) thereof from the firing temperature of the pre-treated and solid support (3) to the fixing temperature (Tf) thereof.

6. The process of claim 5, **characterised in that** it further comprises a stage of storage of the pre-treated and fired support (3), the storage stage being actuated between the firing stage of the pre-treated solid support (3) and the application stage of the covering glaze (4).

7. The process of claim 6, **characterised in that** the variation in temperature (Ts) of the pre-treated fired support (3) comprises a stage of heating the pre-treated fired support (3) up to a fixing temperature (Tf).

8. A construction covering product, in particular a tile, comprising:
at least a solid support (3) obtained by means of a firing stage;
at least a coat of covering glaze (5) applied on the fired support (3) and
fixed thereon by means of a further firing stage;
**characterised in that** it comprises at least a coat of preparation glaze (4) interposed between the fired support (3) and the coat of covering glaze (5), the preparation glaze (4) being maintained at a predetermined fixing temperature (Tf) in order to enable keying of the covering glaze (5) on the preparation glaze (4).

9. The product of claim 8, **characterised in that** it is made by means of a process according to any one of the preceding claims.
